# EUROPÄISCHE PATENTSCHRIFT

(11) **EP 2 966 335 B1**
(45) Veröffentlichungstag und Bekanntmachung des Hinweises auf die Patenterteilung: **08.03.2017**
(21) Anmeldenummer: 15001641.8
(22) Anmeldetag: 02.06.2015
(51) Int. Cl.: F16M 11/38, F16M 13/04, G02B 27/01

(54) **TRAGEVORRICHTUNG FÜR ELEKTRONISCHE ANZEIGEGERÄTE**
CARRYING DEVICE FOR ELECTRONIC DISPLAY DEVICES
DISPOSITIF SUPPORT POUR APPAREILS D'AFFICHAGE ÉLECTRONIQUES

(30) Priorität: 01.07.2014 DE 102014009745
(43) Veröffentlichungstag der Anmeldung: 13.01.2016
(73) Patentinhaber: i-mmersive UG (haftungsbeschränkt), 10785 Berlin (DE)
(72) Erfinder: Quintus, Fax, 10629 Berlin (DE)
(74) Vertreter: Samson & Partner Patentanwälte mbB

(56) Entgegenhaltungen:
- WO-A1-2012/035174
- CN-U- 203 643 688
- GB-A- 2 499 102
- KR-A- 20120 030 203
- KR-A- 20140 054 705
- US-A- 4 253 732
- US-A1- 2010 079 356
- US-A1- 2010 277 575
- US-A1- 2011 261 452

## Beschreibung

### GEBIET DER ERFINDUNG

Die vorliegende Erfindung bezieht sich allgemein auf Tragevorrichtungen für elektronische Anzeigegeräte. Insbesondere bezieht sich die Erfindung auf eine Tragevorrichtung, mittels der ein elektronisches Anzeigegerät am Kopf eines Benutzers befestigt werden kann.

### HINTERGRUND DER ERFINDUNG

Es sind allgemein Tragvorrichtungen bekannt, mittels derer elektronische Anzeigevorrichtungen, wie etwa Smartphones, am Kopf eines Benutzers befestigt werden können. Die bekannten Tragvorrichtungen werden so getragen, dass sich ein Bildschirm der Anzeigevorrichtung in einem definierten Abstand vor den Augen des Benutzers befindet. Der Benutzer kann auf dem Bildschirm Videos, Bilder, etc. betrachten. Um Störungen bei der Betrachtung, z.B. durch von außen eindringendes Licht, zu vermeiden, weisen die bekannten Tragvorrichtungen einen lichtundurchlässigen Rahmen auf, der ähnlich wie ein Rohrabschnitt geformt ist. An einem Ende weist der Rahmen meist eine Anlagefläche für den Kopf des Benutzers auf. An dem gegenüberliegenden Ende weist der Rahmen meist eine Halterung auf, welche das elektronische Anzeigegerät aufnimmt.

Typischerweise sind bekannte Tragevorrichtungen für elektronische Anzeigegeräte aus einem festen, starren Material, häufig Kunststoff, ausgebildet. In ihrer Größe sind bekannte Tragevorrichtungen mit handelsüblichen Taucherbrillen vergleichbar.

Aufgabe der vorliegenden Erfindung ist es, eine verbesserte Tragevorrichtung für elektronische Anzeigegeräte zu Verfügung zu stellen. Insbesondere ist es Aufgabe der Erfindung, eine kostengünstige und leicht zu transportierende Tragevorrichtung für elektronische Anzeigegeräte bereitzustellen.

Aus der US 2011/0261452 A1 ist ein binokulares Kaleidoskop bekannt zum Zweck der Kombination des Gebiets von sich wiederholenden Mustern, mit dem Kaleidoskope in Verbindung gebracht werden, mit einer Tiefenwahrnehmung.

### KURZFASSUNG DER ERFINDUNG

Nach einem ersten Aspekt stellt die vorliegende Erfindung eine Tragevorrichtung für elektronische Anzeigegeräte in Übereinstimmung mit dem Gegenstand des unabhängigen Anspruchs 1 bereit.

Weitere Aspekte und Merkmale bevorzugter Ausführungsbeispiele der Erfindung ergeben sich aus den abhängigen Ansprüchen, den beigefügten Figuren und der nachfolgenden Beschreibung.

### KURZBESCHREIBUNG DER ZEICHNUNG

Ein Ausführungsbeispiel der Erfindung wird nun beispielhaft und unter Bezugnahme auf die beigefügten Figuren beschrieben. Dabei zeigt
Fig. 1 eine Tragevorrichtung für ein elektronisches Anzeigegerät im sog. Anzeigezustand;
Fig. 2 die Tragevorrichtung von Fig. 1 im sog. Transportzustand;
Fig. 3 das Überführen der Tragevorrichtung der Fig. 1 und 2 vom Transportzustand in den Anzeigezustand.

### BESCHREIBUNG DER BEVORZUGTEN AUSFÜHRUNGSBEISPIELE

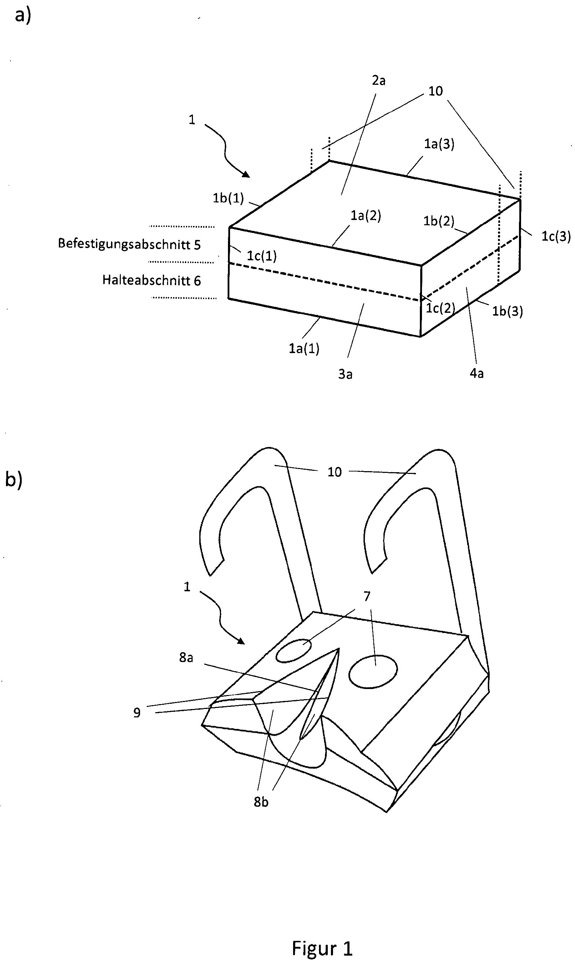

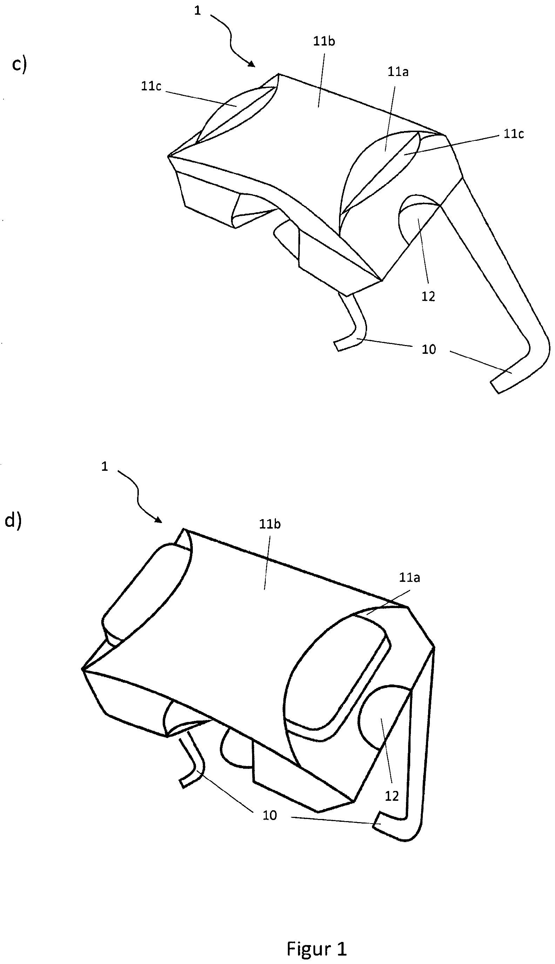

Die Fig. 1 bis 3 veranschaulichen ein Ausführungsbeispiel einer Tragevorrichtung für ein elektronisches Anzeigegerät in Übereinstimmung mit der vorliegenden Erfindung. Vor einer detaillierten Beschreibung folgen zunächst einige allgemeine Erläuterungen zu Ausführungsbeispielen der Erfindung.

Als elektronisches Anzeigegerät wird im Rahmen der Erfindung jedes elektronische Gerät verstanden, das visuelle Medien wie Bilder oder Videos wiedergeben kann. Häufig wird für die Wiedergabe der visuellen Medien ein Bildschirm verwendet; jedoch sind auch andere Formen der Wiedergabe, z.B. mittels eines Projektors, denkbar. Nachfolgend werden zwecks Vereinfachung der Beschreibung ausschließlich elektronische Anzeigevorrichtungen erläutert, die einen Bildschirm aufweisen. Die Erfindung soll jedoch nicht auf solche Anzeigevorrichtungen beschränkt sein.

Die erfindungsgemäße Tragevorrichtung umfasst eine Haltevorrichtung und eine Befestigungsvorrichtung. Mittels der Haltevorrichtung wird das elektronische Anzeigegerät an der Tragevorrichtung gehalten. Dabei kann die Haltevorrichtung in verschiedenster Art und Weise ausgestaltet sein; entscheidend ist einzig, dass das elektrische Anzeigegerät mittels der Haltevorrichtung an der Tragevorrichtung befestigt werden kann. Die Haltevorrichtung darf den Bildschirm der Anzeigevorrichtung dabei nicht verdecken. Die Haltevorrichtung kann als eine Klemme ausgestaltet sein, die das Anzeigegerät in Teilen des Randbereichs einklemmt und somit fixiert. Solche Klemmen sind beispielsweise von Haltesystemen für nachrüstbare Autonavigationssysteme bekannt. Ebenso kann die Haltevorrichtung so ausgestaltet sein, dass sie die Anzeigevorrichtung bis auf den Bildschirm nahezu vollständig umschließt und einfasst, ähnlich wie eine Schutzhülle eines Smartphones. Häufig sind elektronische Anzeigevorrichtungen mit Videokameras ausgestattet. Diese sind regelmäßig an den Stirnenden der Anzeigevorrichtungen angebracht, sowohl auf der Seite, auf der sich der Bildschirm befindet, als auch auf der dem Bildschirm gegenüberliegenden Seite. Haltevorrichtungen können so ausgestaltet sein, dass sie den Stirnbereich oder andere Bereiche, in denen sich eine Videokamera einer Anzeigevorrichtung befindet, auslassen. Dadurch werden Videoaufnahmen auch dann ermöglicht, wenn sich die Anzeigevorrichtung in der Haltevorrichtung befindet.

Die Befestigungsvorrichtung dient zur Befestigung der Tragevorrichtung am Kopf eines Benutzers. Mit der Befestigungsvorrichtung wird die Tragevorrichtung so am Kopf des Benutzers befestigt, dass sie fest sitzt und auch bei alltagstypischen Bewegungen des Benutzers nicht verrutscht. Als Befestigungsvorrichtung können Gummibänder, ähnlich wie bei einer Schwimmbrille, oder auch Ohrbügel, ähnlich wie bei einer herkömmlichen optischen Brille, verwendet werden. Verschiedenste weitere Ausführungsformen von Befestigungsvorrichtungen sind vorstellbar.

Die erfindungsgemäße Tragevorrichtung ist faltbar ausgelegt. Dabei wird unter dem Begriff Falten eine durch Zug- und Druckbewegungen erreichbare, vorgesehene, reproduzierbare Veränderung in der Form der Tragevorrichtung verstanden. Die durch Falten erreichbare Veränderung in der Form der Tragevorrichtung wird bevorzugt durch vordefinierte Falzlinien vorgegeben und ist reversibel.

Die erfindungsgemäße Tragevorrichtung ist derart ausgebildet, dass sie mindestens zwei verschiedene Betriebszustände einnehmen kann. Dabei kann man die Tragevorrichtung durch Falten entlang der vordefinierten Falzlinien vom ersten in den zweiten Betriebszustand überführen, und umgekehrt.

Im ersten Betriebszustand, im Folgenden "Transportzustand" genannt, weist die Tragevorrichtung eine flache, im Wesentlichen räumlich zweidimensionale Ausdehnung auf. Somit nimmt die Tragevorrichtung im Transportzustand ein möglichst geringes räumliches Volumen ein. Der Transportzustand dient in erster Linie einer platzsparenden Verstauung der Tragevorrichtung während ihres Transports. Im Transportzustand ist es nicht vorgesehen, dass die Brille mittels der Befestigungsvorrichtung am Kopf des Benutzers befestigt wird.

Im zweiten Betriebszustand, im Folgenden "Anzeigezustand" genannt, weist die Transportvorrichtung ein räumlich dreidimensionales Volumen auf. Im Anzeigezustand kann die Tragevorrichtung mittels der Befestigungsvorrichtung am Kopf des Benutzers befestigt werden. Der Anzeigezustand ist so ausgelegt, dass der Benutzer den Bildschirm einer an der Tragevorrichtung befestigten Anzeigevorrichtung möglichst komfortabel betrachten kann, wenn die Tragevorrichtung am Kopf des Benutzers befestigt ist. Insbesondere kann die Tragevorrichtung im Anzeigezustand auch so ausgebildet sein, dass sie sich möglichst ergonomisch am Gesicht des Benutzers anliegt.

In manchen Ausführungsbeispielen kann die Tragevorrichtung im Anzeigezustand mittels der Befestigungsvorrichtung so am Kopf des Benutzers befestigt werden, dass der Bildschirm des sich in der Haltevorrichtung befindlichen elektronischen Anzeigegeräts im Wesentlichen frontal und in festem Abstand vor den Augen des Benutzers angeordnet ist. Dabei wird unter einer frontalen Anordnung vor den Augen des Benutzers verstanden, dass der Normalenvektor der Bildschirmebene im Wesentlichen senkrecht auf eine gedachte Gerade steht, die durch beide Augen des Benutzers verläuft. Durch die frontale Anordnung des Bildschirms vor den Augen des Betrachters wird eine angenehme Betrachtung von auf dem Bildschirm wiedergegebenen Medieninhalten sichergestellt. Für eine angenehme Betrachtung von Medieninhalten ist es weiterhin vorteilhaft, wenn der Abstand Bildschirm-Auge über die Dauer der Betrachtung konstant ist. Dies kann dadurch erreicht werden, dass sowohl die Befestigungsvorrichtung derart am Kopf des Benutzers befestigt ist, dass die Tragevorrichtung bei einem normalen Gebrauch nicht verrutscht, als auch die Anzeigevorrichtung rutschfest in der Haltevorrichtung angeordnet ist. Ebenfalls ist es förderlich, wenn die gesamte Tragevorrichtung eine entsprechende Steifigkeit aufweist, so dass sie bei Alltagsbewegungen des Benutzers nicht in Schwingung gerät.

In manchen Ausführungsbeispielen ist die Tragevorrichtung im Anzeigezustand derart ausgebildet, dass der Raum zwischen dem Bildschirm und den Augen des Benutzers von den Seiten der Tragevorrichtung begrenzt wird, falls die Tragevorrichtung auf dem Kopf des Benutzers befestigt ist. Durch eine solche seitliche Begrenzung wird ein nach außen hin abgeschlossener Raum zwischen den Augen des Benutzers und dem Bildschirm geschaffen. In den abgeschlossenen Raum kann im Wesentlichen kein, Staub, Sand, Wind, etc. von außen eindringen. In manchen Ausführungsbeispielen sind die Seitenflächen der Tragevorrichtung aus einem lichtdichten Material ausgebildet. Somit kann in diesen Ausführungsbeispielen im Wesentlichen kein Licht in den abgeschlossenen Raum eindringen Durch eine derartige Ausbildung der Seiten der Tragevorrichtung wird eine von äußeren Störungen weitestgehend unbeeinflusste Betrachtung von Medieninhalten auf dem Bildschirm des Anzeigegeräts gewährleistet.

In manchen Ausführungsbeispielen umfasst die Tragevorrichtung einen im Wesentlichen quaderförmigen Grundkörper, wobei der Grundkörper eine Vorderseite aufweist, an welcher die Haltevorrichtung angeordnet ist, eine Rückseite, in der zwei kreisförmige Augenöffnungen angeordnet sind, und zumindest teilweise umlaufende Seitenflächen, wobei entlang der Seitenflächen zumindest teilweise vordefinierte Falznähte angeordnet sind, die im Wesentlichen parallel zu der Vorderseite und der Rückseite verlaufen, wobei der Grundkörper durch Falten entlang der vordefinierten Falznähte vom zweiten in den ersten Betriebszustand überführt werden kann, und umgekehrt.

In manchen Ausführungsbeispielen umfasst die Tragevorrichtung wenigstens eine optische Sammellinse. Eine solche Sammellinse ermöglicht eine entspannte Betrachtung von Medieninhalten auf dem Bildschirm des Anzeigegeräts auch bei einem geringen Abstand Bildschirm-Auge. Der Einsatz einer Sammellinse erlaubt somit eine kompakte Dimensionierung der Tragevorrichtung auch im Anzeigezustand. In manchen Ausführungsbeispielen ist die Linse im eingeschlossenen Raum zwischen den Augen des Benutzers und dem Bildschirm vor den Augen des Benutzers angeordnet. In manchen Ausführungsbeispielen werden mehrere Sammellinsen verwendet. Häufig werden zwei Sammellinsen verwendet. Jeweils eine Sammellinse ist in diesen Ausführungsbeispielen unmittelbar vor einem Auge des Benutzers angeordnet. In manchen Ausführungsbeispielen mit zwei Sammellinsen sind die Sammellinsen jeweils zusätzlich mit einem so genannten Shutter ausgestattet. Der Shutter kann die Sammellinse in Abhängigkeit des Medieninhalts auf dem Bildschirm öffnen oder verschließen. Durch den Einsatz solcher Shutter ist es möglich, eine dreidimensionale Wahrnehmung bei der Betrachtung entsprechender Medieninhalte zu erzeugen.

In manchen Ausführungsbeispielen umfasst die Befestigungsvorrichtung zwei Ohrbügel. Mit Hilfe der Ohrbügel kann die Tragevorrichtung im Anzeigezustand an den Ohren des Benutzers befestigt werden.

In manchen Ausführungsbeispielen umfasst die Befestigungsvorrichtung einen Nasenbügel. Mit Hilfe des Nasenbügels kann die Tragevorrichtung im Anzeigezustand an der Nase des Benutzers befestigt werden.

In manchen Ausführungsbeispielen umfasst die Befestigungsvorrichtung sowohl zwei Ohrenbügel als auch einen Nasenbügel. In solchen Ausführungsbeispielen kann die Tragevorrichtung im Anzeigezustand ähnlich wie eine handelsübliche optische Brille mittels der Ohrenbügel und des Nasenbügels im Gesicht des Benutzers befestigt werden. In solchen Ausführungsbeispielen kann die Tragevorrichtung in ihrer Erscheinung einer optischen Brille ähneln. An der Stelle der Brillengläser können sich dabei besagte Sammellinsen befinden. In kurzer Distanz zu den Sammellinsen, auf der augenabgewandten Seite der Sammellinsen, kann sich in solchen Ausführungsbeispielen die Haltevorrichtung befinden. In der Haltevorrichtung kann ein elektronisches Anzeigegerät derart befestigt werden, dass sein Bildschirm frontal und in festem Abstand vor den Augen des Benutzers angeordnet ist.

In manchen Ausführungsbeispielen, in denen die Befestigungsvorrichtung zwei Ohrbügel aufweist, sind die Längsachsen der beiden Ohrbügel im Transportzustand im Wesentlichen parallel zu der räumlich zweidimensionalen Ausdehnung der Tragevorrichtung angeordnet. Die Anordnung der Tragevorrichtung dabei vergleichbar mit der Anordnung einer optischen Brille in einer Brillenhülle. Im Anzeigezustand sind die beiden Ohrbügel im Wesentlichen so angeordnet, dass sie senkrecht auf den Bildschirm des in der Haltevorrichtung vorgesehenen elektronischen Anzeigegeräts stehen. Dies ist vergleichbar mit der Anordnung von Bügeln einer optischen Brille, wenn die optische Brille von einem Benutzer getragen wird.

In manchen Ausführungsbeispielen umschließt die Tragevorrichtung im Transportzustand ein sich in der Haltevorrichtung befindliches elektronisches Anzeigegerät im Wesentlichen vollständig. Durch das nahezu vollständige Umschließen des Anzeigegeräts nimmt die Tragevorrichtung im Transportzustand eine Schutzfunktion bezüglich des elektronischen Anzeigegeräts war. Die Tragevorrichtung fungiert in solchen Ausführungsbeispielen im transportzustand als Schutzhülle für das Anzeigegerät.

In manchen Ausführungsbeispielen ist die Tragevorrichtung im Wesentlichen aus einem flexiblen und faltbaren Material ausgebildet. Bevorzugte Materialien umfassen dabei insbesondere Papier, Blech, Pappe, Leder und Kunststoff.

In manchen Ausführungsbeispielen ist das elektronische Anzeigegerät ein Mobiltelefon, ein Smartphone, ein mobiler Videospieler, ein mobiles Bildwiedergabegerät oder ein sonstiges mobiles Anzeigegerät mit Bildschirm.

Zurückkommend zu den Figuren veranschaulichen die Fig. 1 bis 3 schematisch ein spezielles Ausführungsbeispiel einer erfindungsgemäßen Tragevorrichtung für ein elektronisches Anzeigegerät.

Fig. 1a bis d zeigen die Tragevorrichtung im Anzeigezustand, d.h. in einem Zustand, indem die Tragevorrichtung am Gesicht eines Benutzers befestigt werden kann. Die Tragevorrichtung besteht im Anzeigezustand im Wesentlichen aus einem quaderartigen Körper 1. Dabei ist der Körper 1 nicht exakt quaderförmig ausgebildet. Lediglich seine grobe Form entspricht der eines Quaders.

Funktionell-geometrisch lässt sich der Körper 1 grob in zwei Abschnitte aufteilen. Der erste Abschnitt, Befestigungsabschnitt 5, liegt bei Verwendung der Tragevorrichtung im Anzeigezustand am Gesicht des Benutzers an. Der zweite Abschnitt, Halteabschnitt 6, nimmt der bei Verwendung der Tragevorrichtung ein elektronisches Anzeigegerät auf.

Fig. 1 a zeigt eine schematische Darstellung des Körpers 1 der Tragevorrichtung im Anzeigezustand. In dieser Darstellung ist der Körper 1 vereinfacht als idealer Quader mit den Kanten 1 a, 1 b und 1 c dargestellt. Parallele Kanten sind dabei mit (1), (2), etc. durchlaufend nummeriert. Der Quader wird begrenzt durch die sechs Seitenflächen 2a, 2b, 3a, 3b, 4a, 4b. Die Seitenflächen 2b, 3b, 4b, die parallel zu den entsprechenden Seitenflächen 2a, 3a, 4a verlaufen, sind in Fig. 1a nicht zu sehen. Die obere Hälfte des Körpers 1 stellt den Befestigungsabschnitt 5 dar. Er wird nach oben hin durch die Seitenfläche 2a begrenzt, die durch die Kanten 1a und 1b aufgespannt wird. Die untere Hälfte des Körpers 1 stellt den Halteabschnitt 6 dar. Der Halteabschnitt 6 wird nach unten hin durch die Seitenfläche 2b begrenzt. Die beiden Ohrbügel 10 der Tragevorrichtung sind in Fig. 1 durch gestrichelte Linien angedeutet. Die Ohrbügel stehen im Anzeigezustand im Wesentlichen senkrecht auf die Seitenflächen 2a, b und erstrecken sich in Richtung Befestigungsabschnitt 5 vom Körper 1 weg.

Die Fig. 1b bis d zeigen detaillierte Darstellungen des Ausführungsbeispiels der Tragevorrichtung. Auch wenn der Körper 1 in der detaillierten Darstellung der Tragevorrichtung nur in groben Zügen einem Quader entspricht, so werden die in Fig. 1 a eingeführten Bezugszeichen für Kanten und Seitenflächen zur einfacheren Orientierung analog für die Beschreibung der Fig. 1b bis d verwendet.

Fig. 1b zeigt eine Aufsicht auf die Tragevorrichtung des Ausführungsbeispiels in Blickrichtung auf den Befestigungsabschnitt 5. In der Seitenfläche 2a des Befestigungsabschnitts 5 befinden sich zwei kreisförmige Öffnungen 7. Die beiden Öffnungen 7 sind zueinander parallel zur den Kanten 1a des Körpers 1 angeordnet, etwa mittig bezüglich der Kanten 1b. In den beiden Öffnungen ist jeweils eine Sammellinse 7a (nicht gezeigt) angeordnet. Die beiden Öffnungen 7 stellen Augenöffnungen dar. Falls die Tragevorrichtung im Gesicht des Benutzers befestigt ist, blickt dieser durch die Öffnungen 7 in den Hohlraum im Inneren des Körpers 1.

In der Seitenfläche 2a des Befestigungsabschnitts 5 befindet sich eine weitere Öffnung 8a. Die Öffnung 8a erstreckt sich von der Mitte der Seitenfläche 2a ausgehend im Wesentlichen in Form eines gleichschenkeligen Dreiecks in Richtung der Kante 1 a(2) und schließt diese mit ein. Die Öffnung 8a weist eine Achsensymmetrie auf. Die Symmetrieachse entspricht der Mittelsenkrechten auf die Verbindungsstrecke zwischen den Mittelpunkten der beiden kreisförmigen Öffnungen 7. Die Öffnung 8a ist Teil des Nasenbügels 8 der Tragevorrichtung. Der Nasenbügel umfasst weiterhin zwei Nasenflügel 8b. Die beiden Nasenflügel 8b erstrecken sich vom Randbereich Seitenfläche 2a-Öffnung 8a aus ungefähr bis zur Hälfte in den inneren Raum des Körpers 1 hinein. Die Übergangskanten 9 zwischen der Seitenfläche 2a und den beiden Nasenflügeln 8b sind dabei so gefalzt, dass die beiden Nasenflügel 8b im Inneren des Körpers 1 aufeinander zulaufen.

An den beiden Seitenflächen 4a, b des Körpers 1 ist jeweils ein Ohrbügel 10 befestigt. Die beiden Ohrbügel 10 sind dabei in der Nähe der Kanten 1 c(3) bzw. 1 c(4) angeordnet. Die Ohrbügel 10 stehen im Wesentlichen senkrecht auf die Seitenflächen 2a, 2b des Körpers 1 und erstrecken sich in Richtung des Befestigungsabschnitts 5 vom Körper 1 weg. An dem Ende, welches nicht am Körper 1 befestigt ist, weisen die beiden Ohrbügel 10 jeweils eine grob halbkreisförmige Krümmung auf. Ein solcher gekrümmter Verlauf ist von Ohrbügeln von optischen Brillen bekannt.

Der Nasenbügel 8 bildet zusammen mit den beiden Ohrbügeln 10 im Wesentlichen die Befestigungsvorrichtung der Tragevorrichtung aus. Zum Befestigen der Tragevorrichtung am Kopf des Benutzers wird die Tragevorrichtung so am Kopf des Benutzers angeordnet, das der Nasenbügel 8 des Befestigungsabschnitts 5 an der Nase des Benutzers anliegt. Die beiden Ohrbügel 10 werden an den Ohren des Benutzers befestigt. Durch die Kombination aus Nasenbügel 8 und Ohrbügel 10 kann die Tragevorrichtung ähnlich wie eine optische Brille am Kopf des Benutzers befestigt werden. Die Seite 2a des Befestigungsabschnitts liegt dabei im Wesentlichen am Gesicht des Benutzers an. Falls die Tragevorrichtung im Gesicht des Benutzers befestigt ist, kann dieser durch die Augenöffnungen 7 durch die Sammellinsen 7a hindurch in den Hohlraum im Inneren des Körpers 1 blicken. Falls in der Haltevorrichtung der Tragevorrichtung ein Anzeigegerät befestigt ist, blickt der Benutzer der Tragevorrichtung durch den Hohlraum im Inneren des Körpers 1 frontal auf den Bildschirm der Tragevorrichtung, welcher parallel zur Seitenfläche 2a im Halteabschnitt 6 angeordnet ist.

Fig. 1c, d zeigen eine Aufsicht auf die Tragevorrichtung von Fig. 1b in Blickrichtung auf den Halteabschnitt 6. Dabei zeigt Fig.1c die Tragevorrichtung in einem Zustand, in dem kein elektronisches Anzeigegerät in der Haltevorrichtung 11 befestigt ist, während Fig. 1d die Tragevorrichtung samt in der Haltevorrichtung 11 befestigtem elektronischem Anzeigegerät zeigt.

Die Haltevorrichtung 11 ist im Wesentlichen an der Seitenfläche 2b des Halteabschnitts 6 angeordnet. Dabei ist die Haltevorrichtung taschenförmig ausgebildet. Sie umfasst eine innere Taschenbegrenzung 11a und eine äußere Taschenbegrenzung 11b. Die innere Taschenbegrenzung 11a erstreckt sich im Wesentlichen über die gesamte Seitenfläche 2b. Die innere Taschenbegrenzung 11a ist an allen vier Kanten der Seitenfläche 2b fest mit dem Körper 1 der Tragevorrichtung verbunden. Die äußere Taschenbegrenzung 11 b erstreckt sich ebenfalls über einen Großteil der Seitenfläche 2b. Nur im Randbereich um die gegenüberliegenden Kanten 1 b(3) und 1 b(4) weist die äußere Taschenbegrenzung 11 b Auslassungen bezüglich der Seitenfläche 2b auf. Die äußere Taschenbegrenzung 11 b ist entlang der Kanten 1a(1) und 1a(4) fest mit dem Körper 1 der Tragevorrichtung verbunden. Entlang der Kanten 1 b(3) und 1 b(4) ist die äußere Taschenbegrenzung 11 b nicht fest mit dem Körper 1 verbunden. Somit weist die taschenförmige Haltevorrichtung 11 entlang der Kanten 1 b(3) und 1 b(4) zwei gegenüberliegende Öffnungsbereiche auf. Über die Öffnungsbereiche ist es möglich, ein elektronisches Anzeigegerät zwischen die innere Taschenbegrenzung 11a und die äußere Taschenbegrenzung 11b seitlich in die Haltevorrichtung 11 einzuschieben, wie es in Fig. 1d dargestellt ist. In seiner finalen Halteposition ist das Anzeigegerät mittig auf der Seitenfläche 2b in der Haltevorrichtung 11 angeordnet und zwischen der inneren Taschenbegrenzung 11a und der äußeren Taschenbegrenzung 11 b eingeklemmt. Der Bildschirm des Anzeigegeräts, der vom Benutzer mit Hilfe der Tragevorrichtung betrachtet werden soll, ist dabei parallel zur Seitenfläche 2b in Richtung des Befestigungsabschnitts 5 ausgerichtet. Die innere Taschenbegrenzung 11a weist in dem Bereich, in dem sich der zu betrachtende Bildschirm in der Halteposition befindet, einen für Licht transparenten Bereich auf (nicht gezeigt). Dieser Bereich kann auch durch eine Auslassung in der inneren Taschenbegrenzung 11a ausgebildet werden. Die äußere Taschenbegrenzung 11 b umschließt ein sich in Halteposition befindliches Anzeigegerät nicht vollständig. Wie in Fig. 1d zu sehen ist, sind die beiden Stirnbereiche der Anzeigevorrichtung nicht von der äußeren Taschenbegrenzung 11 b bedeckt. Dadurch wird sichergestellt, dass im Bereich der Stirnseiten angeordnete Videokameras (nicht gezeigt) des Anzeigegeräts auch dann verwendet werden können, wenn das Anzeigegerät in der Haltevorrichtung 11 befestigt ist.

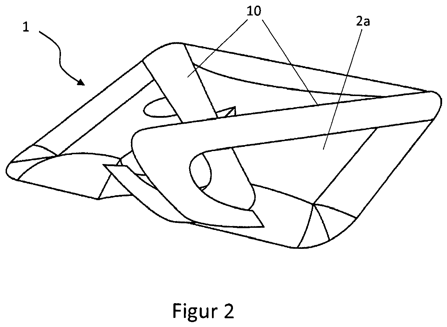

Im Bereich der beiden Öffnungen der Haltevorrichtung 11 ist jeweils eine Einschublasche 11 c angeordnet. Die Einschublasche 11 c ist entlang der Kanten 1 b(3) bzw. 1 b(4) am Körper 1 der Tragevorrichtung befestigt. Die Einschublasche 11 c steht, wie in Fig. 1c zu sehen ist, schräg vom Körper der Tragevorrichtung weg, falls sich kein Anzeigegerät in der Haltevorrichtung 11 befindet. Befindet sich ein Anzeigegerät in der Haltevorrichtung 11 (Fig. 2b), so drückt die Lasche von unten gegen das sich in der Haltevorrichtung 11 befindliche Anzeigegerät (nicht gezeigt). Dadurch wird zusätzlich ein Verrutschen des Anzeigegeräts in der Haltevorrichtung 11 verhindert.

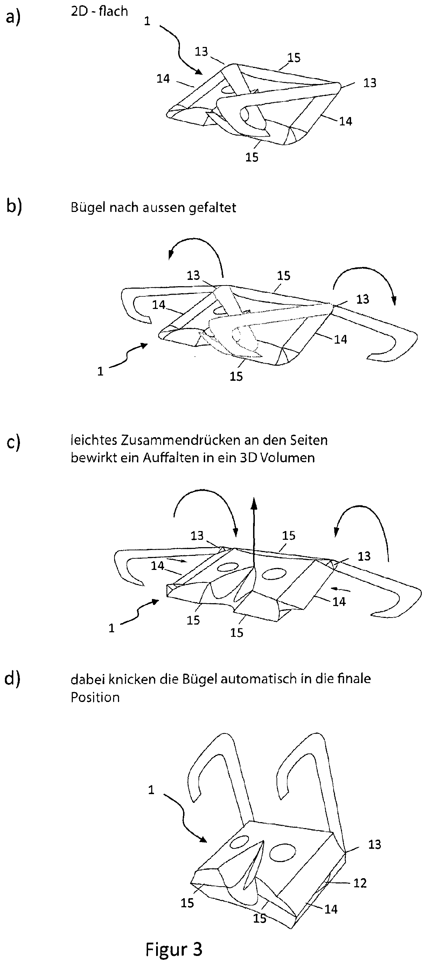

Die Tragevorrichtung umfasst weiterhin eine Auffalthilfe 12. Diese ist als Eingriff ausgebildet und an der Seitenfläche 4a des Körpers 1 der Tragevorrichtung angeordnet. Die Auffalthilfe 12 dient der leichteren Überführung der Tragevorrichtung vom Transportzustand in den Anzeigezustand, und umgekehrt. Die reversible Überführung der Tragevorrichtung zwischen ihren Betriebszuständen mittels Faltung wird später in der Beschreibung unter Bezugnahme auf Fig. 3 im Detail erläutert.

Fig. 2 zeigt die Tragevorrichtung im Transportzustand, d.h. in dem Zustand, indem die Tragevorrichtung ein möglichst geringes Raumvolumen einnimmt und nicht im Gesicht eines Benutzers befestigt werden kann. Im Transportzustand weist der Körper 1 der Tragevorrichtung im Wesentlichen eine flache, zweidimensionale Struktur auf. Die Seitenflächen 3a, b und 4a, b des Körpers 1 stehen dabei nicht mehr im Wesentlichen senkrecht auf die Seitenflächen 2a, b, wie es im Anzeigezustand der Fall ist. Vielmehr sind die Seitenflächen 3a, b und 4a, b im Transportzustand im Wesentlichen parallel zu den Seitenflächen 2a, b angeordnet, so dass die Gesamtheit der Seitenflächen des Körpers 1 eine im Wesentlichen flache, zweidimensionale Struktur ausbildet. Der Körper 1 schließt im Transportzustand im Wesentlichen kein Raumvolumen ein.

Ebenso stehen die Ohrbügel 10 der Tragevorrichtung im Transportzustand nicht im Wesentlichen senkrecht auf die Flächen 2a, b des Körpers 1 der Tragevorrichtung, wie es im Anzeigezustand der Fall ist. Vielmehr sind die Ohrbügel 10 im Transportzustand im Wesentlichen parallel zu den Seitenflächen 2a, b angeordnet. Die beiden Ohrbügel 10 sind dabei kreuzweise so übereinander und über der Seitenfläche 2a verschränkt, dass die Ohrbügel 10 im Transportzustand im Wesentlichen kein zusätzliches Raumvolumen einnehmen im Vergleich zu dem Raumvolumen, welches durch den flachen, blattförmigen Körper 1 eingenommen wird. Insbesondere ragen die Ohrbügel 10 im Transportzustand nicht über die durch die Seitenflächen 2a, b bestimmte Grundfläche des im Transportzustand blattförmigen Körpers 1 hinaus.

Die Überführung der Tragevorrichtung vom Transportzustand in den Anzeigezustand, und umgekehrt, erfolgt mittels Faltung entlang vordefinierter Falznähte. Der Übergang vom Transportzustand in den Anzeigezustand mittels Faltung wird im Folgenden anhand der Fig. 3a bis d erläutert.

Fig. 3a zeigt die Tragevorrichtung im gleichen Transportzustand wie in Figur 2. Im Zuge der Überführung der Tragevorrichtung vom Transportzustand in den Anzeigezustand werden zuerst die Ohrbügel 10 umgefaltet. Im Transportzustand sind die Ohrbügel 10, wie in Fig. 3a zu sehen ist, kreuzweise übereinander und im Wesentlichen parallel über der Seitenfläche 2a des flachen Körpers 1 angeordnet. Die Ohrbügel 10 werden nun um 180° nach außen gefaltet, wie in Fig. 3b gezeigt ist. Das Umfalten der Ohrbügel 10 erfolgt dabei entlang der an der Schnittstelle Körper 1-Ohrbügel 10 vordefinierten Falznaht 13.

Nachdem die Ohrbügel 10 nach außen gefaltet wurden, wird der flache Körper 1 des Transportzustands in den im Wesentlichen quaderförmigen Körper 1 des Anzeigezustands überführt. Diese Überführung wird in Fig. 3c dargestellt. Sie erfolgt im Wesentlichen durch das Ausüben eines leichten Drucks auf die Falznähte 14, welche parallel zu den Kanten 1 b des Quaders in den Seitenflächen 4a, b vordefiniert sind. Vorzugsweise wird der leichte Druck über die Auffalthilfe 12, die an der Seitenfläche 4a angeordnet ist, auf die Falznähte 14 ausgeübt.

Durch den seitlichen Druck auf die Falznähte 14 richtet sich der flache Körper 1 des Transportzustands langsam entlang der sich in den Seitenflächen 3a, b und 4a, b befindlichen vordefinierten Falznähte 15 und 14, welche im Wesentlichen parallel zu den Kanten 1 b des Quaders verlaufen, auf und geht in den im Wesentlichen quaderförmigen Körper 1 des Anzeigezustands über. Im Zuge dieses Übergangs richten sich auch die Nasenflügel 8b, die im Transportzustand im Wesentlichen parallel zu den Seitenflächen 2a, b angeordnet sind, in Richtung des Innenraums des entstehenden dreidimensionalen, quaderförmigen Körpers 1 des Anzeigezustands aus.

Durch das Aufrichten des vormals flachen Körpers 1 richten sich die beiden Ohrbügel ebenso automatisch von ihrer nach außen hin abgeknickten Position (siehe Fig. 3b) auf und nehmen ihre der Anzeigeposition entsprechende Ausrichtung ein, wie in Fig. 3d gezeigt ist. Im Anzeigezustand stehen die Ohrbügel 10 in ihrer Längsachse im Wesentlichen senkrecht auf die Seitenflächen 2a, b des im Wesentlichen quaderförmigen Körpers 1 der Tragevorrichtung.

Fig. 3d zeigt die Tragevorrichtung nach Beendigung der Überführung vom Transportzustand in den Anzeigezustand, d.h. in dem identischen Anzeigezustand der Fig. 1b.

Der mit Hilfe der Fig. 3a bis 3d beschriebene Vorgang der Überführung der Tragevorrichtung vom Transportzustand in den Anzeigezustand ist reversibel. Eine Überführung der Tragevorrichtung vom Anzeigezustand in den Transportzustand ist durch eine Umkehrung der in den Figuren 3a bis d beschriebenen Schritte beliebig oft möglich.

## Patentansprüche

1. Tragevorrichtung für ein elektronisches Anzeigegerät, umfassend:
- eine Haltevorrichtung (11) zum Halten eines elektronisches Anzeigegeräts an der Tragevorrichtung; und
- eine Befestigungsvorrichtung zum Befestigen der Tragevorrichtung am Kopf eines Benutzers;
**dadurch gekennzeichnet, dass**
die Tragevorrichtung faltbar ist und derart ausgebildet ist, dass sie mindestens zwei Betriebszustände einnehmen kann,
einen ersten Betriebszustand, in dem die Tragevorrichtung eine flache, im Wesentlichen räumlich zweidimensionale Ausdehnung aufweist und nicht am Kopf des Benutzers befestigt werden kann, und
einen zweiten Betriebszustand, in dem die Tragevorrichtung eine räumlich dreidimensionale Ausdehnung aufweist und am Kopf des Benutzers befestigt werden kann,
wobei die Tragevorrichtung durch Falten entlang vordefinierter Falznähte (13, 14, 15) vom ersten in den zweiten Betriebszustand überführt werden kann, und umgekehrt.

2. Tragevorrichtung nach Anspruch 1, wobei die Tragevorrichtung einen im Wesentlichen quaderförmigen Grundkörper (1) umfasst, wobei der Grundkörper (1) aufweist:
- eine Vorderseite (2b), an welcher die Haltevorrichtung (11) angeordnet ist;
- eine Rückseite (2a), in der zwei kreisförmige Augenöffnungen (7) angeordnet sind; und
- Seitenflächen (3a, 3b, 4a, 4b), wobei entlang der Seitenflächen (3a, 3b, 4a, 4b) zumindest teilweise vordefinierte Falznähte (14, 15) angeordnet sind, die im Wesentlichen parallel zu der Vorderseite (2b) und der Rückseite (2a) verlaufen, wobei der Grundkörper (1) durch Falten entlang der vordefinierten Falznähte (14, 15) vom zweiten in den ersten Betriebszustand überführt werden kann, und umgekehrt.

3. Tragevorrichtung nach Anspruch 2, wobei jeweils ein Ohrbügel (10) an einer Seitenfläche (4a, 4b) des Grundkörpers (1) angeordnet ist und im zweiten Betriebszustand die Ohrbügel (10) im Wesentlichen senkrecht auf die Vorderseite (2b) und die Rückseite (2a) stehen und sich in Richtung der Rückseite (2a) vom Grundkörper (1) weg erstrecken.

4. Tragevorrichtung nach einem der vorherigen Ansprüche, wobei die Tragevorrichtung im zweiten Betriebszustand mittels der Befestigungsvorrichtung so am Kopf des Benutzers befestigt werden kann, dass ein Bildschirm des sich in der Haltevorrichtung (11) befindlichen elektronischen Anzeigegeräts im Wesentlichen frontal und in festem Abstand vor den Augen des Benutzers angeordnet ist.

5. Tragevorrichtung nach einem der vorherigen Ansprüche, wobei im zweiten Betriebszustand ein eingeschlossener Raum zwischen dem Bildschirm und den Augen des Benutzers von den Seiten der Tragevorrichtung (3a, 3b , 4a, 4b) begrenzt wird, so dass im Wesentlichen kein Licht von außerhalb der Tragevorrichtung in den eingeschlossenen Raum eindringen kann.

6. Tragevorrichtung nach einem der vorherigen Ansprüche, wobei die Tragevorrichtung wenigstens eine optische Sammellinse (11a) umfasst, die im zweiten Betriebszustand im eingeschlossenen Raum zwischen dem Bildschirm und den Augen des Benutzers vor den Augen des Benutzers angeordnet ist.

7. Tragevorrichtung nach einem der vorherigen Ansprüche, wobei die Befestigungsvorrichtung zwei Ohrbügel (10) und einen Nasenbügel (8) umfasst, mittels derer die Tragevorrichtung im zweiten Betriebszustand am Benutzer befestigt werden kann.

8. Tragevorrichtung nach Anspruch 7, wobei die Längsachsen der beiden Ohrbügel (10)
- im ersten Betriebszustand im Wesentlichen parallel zu der räumlich zweidimensionale Ausdehnung der Tragevorrichtung angeordnet sind;
- im zweiten Betriebszustand so angeordnet sind, dass sie im Wesentlichen senkrecht auf den Bildschirm des sich in der Haltevorrichtung (11) vorgesehenen elektronischen Anzeigegeräts stehen.

9. Tragevorrichtung nach einem der vorherigen Ansprüche, wobei die Tragevorrichtung im ersten Betriebszustand das sich in der Haltevorrichtung (11) befindliches elektronisches Anzeigegerät im Wesentlichen umschließt.

10. Tragevorrichtung nach einem der vorherigen Ansprüche, wobei die Tragevorrichtung im Wesentlichen aus einem flexiblen und faltbaren Material ausgebildet ist, insbesondere aus Papier, Blech, Pappe, Leder oder Kunststoff.

11. Tragevorrichtung nach einem der vorherigen Ansprüche, wobei das elektronische Anzeigegerät ein Mobiltelefon, ein Smartphone, ein mobiler Videospieler, ein mobiles Bildwiedergabegerät oder ein sonstiges mobiles Anzeigegerät mit Bildschirm ist.

## Claims

1. Support device for an electronic display unit, comprising:
- a holding device (11) for holding an electronic display unit on the support device; and
- a fastening device for fastening the support device to a user's head;
**characterized in that** the support device is foldable and designed in such a way that it can assume at least two operating states, namely a first operating state in which the support device has a flat, substantially spatially two-dimensional extent and cannot be fastened to the user's head, and a second operating state in which the support device has a spatially three-dimensional extent and can be fastened to the user's head, wherein the support device can be transferred from the first to the second operating state, and vice versa, by folding along predefined fold seams (13, 14, 15).

2. Support device according to Claim 1, wherein the support device comprises a substantially parallelepipedal basic body (1), wherein the basic body (1) has:
- a front side (2b) on which the holding device (11) is arranged;
- a rear side (2a) in which two circular eye openings (7) are arranged; and
- side surfaces (3a, 3b, 4a, 4b), wherein at least partially predefined fold seams (14, 15) are arranged along the side surfaces (3a, 3b, 4a, 4b) and extend substantially parallel to the front side (2b) and the rear side (2a), wherein the basic body (1) can be transferred from the second to the first operating state, and vice versa, by folding along the predefined fold seams (14, 15).

3. Support device according to Claim 2, wherein an ear piece (10) is arranged in each case on a side surface (4a, 4b) of the basic body (1) and, in the second operating state, the ear pieces (10) are substantially perpendicular to the front side (2b) and the rear side (2a) and extend away from the basic body (1) in the direction of the rear side (2a).

4. Support device according to one of the preceding claims, wherein, in the second operating state, the support device can be fastened by means of the fastening device to the user's head such that a screen of the electronic display unit present in the holding device (11) is arranged substantially frontally and at a fixed distance in front of the user's eyes.

5. Support device according to one of the preceding claims, wherein, in the second operating state, an enclosed space between the screen and the user's eyes is bounded by the sides of the support device (3a, 3b, 4a, 4b), with the result that substantially no light is able to penetrate into the enclosed space from outside the support device.

6. Support device according to one of the preceding claims, wherein the support device comprises at least one optical condenser lens (11a) which, in the second operating state, is arranged in front of the user's eyes in the enclosed space between the screen and the user's eyes.

7. Support device according to one of the preceding claims, wherein the fastening device comprises two ear pieces (10) and a nose clip (8), by means of which the support device can be fastened to the user in the second operating state.

8. Support device according to Claim 7, wherein the longitudinal axes of the two ear pieces (10)
- are arranged substantially parallel to the spatially two-dimensional extent of the support device in the first operating state;
- are arranged in the second operating state such that they are substantially perpendicular to the screen of the electronic display unit provided in the holding device (11).

9. Support device according to one of the preceding claims, wherein, in the first operating state, the support device substantially encloses the electronic display unit present in the holding device (11).

10. Support device according to one of the preceding claims, wherein the support device is substantially formed from a flexible and foldable material, in particular from paper, sheet metal, paperboard, leather or plastic.

11. Support device according to one of the preceding claims, wherein the electronic display unit is a mobile telephone, a smartphone, a mobile video player, a mobile image playback unit or some other mobile display unit having a screen.

## Revendications

1. Dispositif porteur pour un appareil d'affichage électronique comprenant :
- un dispositif de maintien (11) pour le maintien d'un appareil d'affichage électronique sur le dispositif porteur ; et
- un dispositif de fixation pour la fixation du dispositif porteur sur la tête d'un utilisateur,
**caractérisé en ce que** le dispositif porteur est pliable et est configuré de sorte à pouvoir occuper au moins deux états de fonctionnement,
un premier état de fonctionnement dans lequel le dispositif porteur présente une extension plate, essentiellement en deux dimensions spatialement et ne peut pas être fixé sur la tête de l'utilisateur, et
un deuxième état de fonctionnement dans lequel le dispositif porteur présente une extension en trois dimensions spatialement et peut être fixé sur la tête de l'utilisateur,
le dispositif porteur pouvant être transféré du premier au deuxième état de fonctionnement et inversement par pliage le long de plis prédéfinis (13, 14, 15).

2. Dispositif porteur selon la revendication 1, **caractérisé en ce qu'**il comprend un corps de base (1) essentiellement de forme parallélépipédique, le corps de base (1) présentant
- un côté avant (2b) sur lequel est disposé le dispositif de maintien (11) ;
- un côté arrière (2a) dans lequel sont disposées deux ouvertures en oeil (7) circulaires ; et
- des faces latérales (3a, 3b, 4a, 4b), des plis (14, 15) étant au moins en partie prédéfinis, essentiellement parallèles au côté avant (2b) et au côté arrière (2a), le long des faces latérales (3a, 3b, 4a, 4b), le corps de base (1) pouvant être transféré du deuxième au premier état de fonctionnement et inversement par pliage le long des plis prédéfinis (14, 15).

3. Dispositif porteur selon la revendication 2, dans lequel une oreillette (10) est disposée au niveau d'une face latérale (4a, 4b) du corps de base (1) et, dans le deuxième état de fonctionnement, les oreillettes (10) s'étendent de manière essentiellement perpendiculaire au côté avant (2b) et au côté arrière (2a) et sont à distance du corps de base (1) en direction du côté arrière (2a).

4. Dispositif porteur selon l'une quelconque des revendications précédentes, **caractérisé en ce qu'**il peut être fixé, dans le deuxième état de fonctionnement, sur la tête de l'utilisateur, au moyen du dispositif de fixation, de telle manière qu'un écran de l'appareil d'affichage électronique se trouvant dans le dispositif porteur (11) est disposé, pour l'essentiel côté frontal et à une distance fixe devant les yeux de l'utilisateur.

5. Dispositif porteur selon l'une quelconque des revendications précédentes, **caractérisé en ce que**, dans le deuxième mode de fonctionnement, un espace inclus entre l'écran et les yeux de l'utilisateur, est délimité par les côtés du dispositif porteur (3a, 3b, 4a, 4b), de sorte que, pour l'essentiel, aucune lumière venant de l'extérieur du dispositif porteur ne peut pénétrer dans l'espace inclus.

6. Dispositif porteur selon l'une quelconque des revendications précédentes, **caractérisé en ce qu'**il comprend au moins une lentille convergente optique (11a) disposée, dans le deuxième état de fonctionnement, devant les yeux de l'utilisateur, dans l'espace inclus entre l'écran et les yeux de l'utilisateur.

7. Dispositif porteur selon l'une quelconque des revendications précédentes, **caractérisé en ce que** le dispositif de fixation comprend deux oreillettes (10) et un support de nez (8) au moyen desquels le dispositif porteur peut être fixé sur l'utilisateur dans le deuxième état de fonctionnement.

8. Dispositif porteur selon la revendication 7, **caractérisé en ce que** les axes longitudinaux des deux oreillettes (10)
- dans le premier état de fonctionnement, sont essentiellement parallèles à l'extension en deux dimensions dans l'espace du dispositif porteur ;
- dans le deuxième état de fonctionnement sont disposées de manière essentiellement perpendiculaire à l'écran du dispositif d'affichage électronique prévu dans le dispositif de maintien (11).

9. Dispositif porteur selon l'une quelconque des revendications précédentes, **caractérisé en ce que**, dans le premier état de fonctionnement, il enserre, pour l'essentiel, l'appareil d'affichage électronique se trouvant dans le dispositif de maintien (11).

10. Dispositif porteur selon l'une quelconque des revendications précédentes, **caractérisé en ce qu'**il est constitué, pour l'essentiel, d'un matériau souple et pliable, en particulier de papier, de métal, de carton, de cuir ou de matière plastique.

11. Dispositif porteur selon l'une quelconque des revendications précédentes, **caractérisé en ce que** l'appareil d'affichage électronique est un téléphone mobile, un smartphone, un lecteur vidéo mobile, un appareil de reproduction d'images ou un appareil d'affichage mobile quelconque doté d'un écran.
